# EUROPÄISCHE PATENTSCHRIFT

(11) **EP 1 804 405 B1**
(45) Veröffentlichungstag und Bekanntmachung des Hinweises auf die Patenterteilung: **26.01.2011**
(21) Anmeldenummer: 06124441.4
(22) Anmeldetag: 21.11.2006
(51) Int. Cl.: H04J 3/06, G08B 13/196, H04N 7/18

(54) **Verfahren zur Synchronisation von medialen Datenströmen**
Method for synchronising medial data streams
Procédé pour la synchronisation de flux de données de média

(30) Priorität: 27.12.2005 DE 102005062468
(43) Veröffentlichungstag der Anmeldung: 04.07.2007
(73) Patentinhaber: ROBERT BOSCH GMBH, 70442 Stuttgart (DE)
(72) Erfinder: Lietz, Stephan, 31162, Bad Salzdetfurth (DE); Benzler, Ulrich-Lorenz, 30855, Langenhagen (DE)

(56) Entgegenhaltungen:
- EP-A1- 1 357 759
- WO-A-2005/120071
- US-A1- 2002 135 682
- US-A1- 2005 128 318

## Beschreibung

Die Erfindung betrifft ein Verfahren zur Synchronisation von Datenströmen, eine Speichereinrichtung, ein Netzwerk, ein Computerprogramm und ein Computerprogrammprodukt.

### Stand der Technik

Auf dem Gebiet der Videoüberwachung sowie der Unterhaltungseelektronik ist es oftmals notwendig, Audio- und/oder Videodatenströme synchronisiert zu präsentieren, obgleich diese nicht-synchronisiert aufgenommen worden sind. Ein typisches Beispiel hierfür ist eine digitalisierte, netzwerkgestützte Videoüberwachungseinrichtung mit zusätzlichen Mikrofonen. Derartige Einrichtungen weisen gewöhnlicherweise voneinander getrennte Kameras und Mikrofone auf, die ihre Video- und Audiosignale unabhängig von externen Synchronisationssignalen erzeugen und diese Signale bspw. nach einer Signalkomprimierung digital über ein Netzwerk übertragen.

Bei einer sogenannten Ethernet-Übertragung gemäß dem IEEE802.1-Standard werden für derartige Aufgaben Protokolle wie IP, UDP, TCP, RTP/RTCP und RTSP genutzt. Hierbei bietet insbesondere das RTP-Protokoll die Möglichkeit zur Einbindung von Zeitstempeln oder Zeitmarken, über die bspw. eine Synchronisation und eine Kontrolle einer Anzeigegeschwindigkeit möglich ist. Derartige Zeitmarken beziehen sich auf eine sogenannte Präsentationszeit, die gleichbedeutend mit einer Relativzeit ist, während dieser bspw. ein Bild auf einem Bildschirm anzuzeigen ist. Diese Relativzeit ist einer inneren Uhr in der Kamera und/oder dem Mikrofon zugeordnet, was einer festgelegten Auflösung von bspw. 27 MHz und somit einer jeweiligen Dauer von ungefähr 37 Nanosekunden entspricht.

Falls das Netzwerk mehrere Erfassungseinrichtungen wie Kameras und/oder Mikrofone aufweisen sollte, kann es vorkommen, dass deren innere Zeiteinteilungen aufgrund von Toleranzen einzelner Erfassungseinrichtungen sowie von Verschiebungen (drifts) geringfügig voneinander abweichen können. Falls ein bestimmtes Objekt von mehreren Erfassungseinrichtungen erfasst wird, sind diese Erfassungseinrichtungen in der Regel nicht direkt miteinander verbunden. Trotzdem übermittelt bspw. ein Mikrofon Signale, die im Falle einer Präsentation einem oder mehreren Videosignalen zugeordnet werden sollen. Demnach sollte es bspw. möglich sein, Signale einer ersten Kamera und eines ersten Mikrofons oder Signale einer zweiten Kamera und dem ersten Mikrofon gleichzeitig anzuzeigen oder vorzuführen und diese somit wiederzugeben.

In Überwachungssystemen werden die Audio- und Videosignale üblicherweise in Aufnahme- oder Aufzeichnungsgeräten gespeichert und zu einem späteren Zeitpunkt in der Regel auf Abruf abgespielt oder vorgeführt. Allerdings ist es auch möglich, Signale direkt anzuzeigen, was als ein bestimmter Fall einer Speicherung mit einer Speicherdauer t=0 aufgefasst werden kann. Falls die Audio- und/oder Videosignale gespeichert werden, gibt es keine Möglichkeit, eine ursprüngliche Zeiteinteilung der Erfassungseinrichtungen wiederzugewinnen, da die gespeicherten Daten für die Signale normalerweise keine Informationen darüber umfassen. Es ist lediglich eine Zeiteinteilungsinformation einer berechneten Präsentationszeit bzgl. der inneren Uhren der Erfassungseinrichtungen verfügbar. Da die inneren Uhren der Erfassungsvorrichtungen voneinander zumindest geringfügig abweichen können, können relative Präsentationszeiten über eine längere Aufnahmezeit große Differenzen aufweisen. Bei einer kontinuierlichen Aufnahme kann dies bedeuten, dass ein bestimmtes Fragment einer Videoaufnahme nicht zu demselben Zeitpunkt wie eine zugehörige Audioaufnahme wiedergegeben werden kann.

Eine Möglichkeit zur Lösung eines derartigen Problems wäre, sämtliche inneren Uhren der Erfassungsvorrichtungen zu synchronisieren, doch dies ist bspw. dann nicht möglich, wenn bspw. bereits bestehende ältere Überwachungssysteme erweitert werden oder wenn billige Erfassungseinrichtungen, die nicht diese Fähigkeit aufweisen, benutzt werden. Außerdem ist ein sog. RTP-Zeitstempel in der Regel mit einer Audio-Videoabtast-Frequenzuhr synchronisiert, die jedoch von einer Realzeituhr bspw. aufgrund eines Temperaturdrifts in Analog-Digitalkonvertern in Erfassungseinrichtungen abweichen kann.

Aus der Druckschrift D1 (US 2005/0128318 A1) ist ein Videoüberwachungssystem bekannt, das dazu ausgebildet ist, Videos sowie Datenvermerke in einem computerlesbaren Medium abzuspeichern. Die Datenvermerke sind über Suchkriterien recherchierbar. Außerdem ist eine Verknüpfung der gespeicherten Datenvermerke zu korrespondierenden Videosegmenten eines gespeicherten Videos vorgesehen, so dass über die Datenvermerke ein Videosegment gesucht werden kann. Dieses Videoüberwachungssystem umfasst herkömmliche Videokameras, Kamera-Streamer, einen Video-Server und eine Eingabeeinrichtung, die über ein Netzwerk miteinander verbunden sind. Eine durch das Videoüberwachungssystem benützte Software umfasst ein Aufnahmeprogramm für eine Datenkennzeichnung. Ein Block dieses Aufnahmeprogramms ist dazu ausgebildet, eine empfangene Datenkennzeichnung mit einem Zeitstempel, dessen Zeitpunkt von dem Video-Server bereitgestellt wird, zu versehen. Weiterhin ist die Eingabeeinrichtung dazu ausgebildet, die Datenkennzeichnung und den Zeitstempel in einem Speicher des Video-Servers zu speichern. Der Zeitstempel ist dazu ausgebildet, die Datenkennzeichnung mit einem korrespondierenden Videosegment zu synchronisieren.

Vor diesem Hintergrund wird ein Verfahren mit den Merkmalen des Patentanspruchs 1, eine Speichereinrichtung mit den Merkmalen des Patentanspruchs 8, ein Netzwerk mit den Merkmalen des Patentanspruchs 9, ein Computerprogramm mit den Merkmalen des Patentanspruchs 10 und ein Computerprogrammprodukt mit den Merkmalen des Patentanspruchs 11 vorgeschlagen.

### Vorteile der Erfindung

Bei dem erfindungsgemäßen Verfahren zur Synchronisation von Datenströmen werden die Datenströme von einer Anzahl Erfassungseinrichtungen für eine Speichereinrichtung bereitgestellt. Diesen Datenströmen wird bei Empfang in der Speichereinrichtung jeweils eine zusätzliche Zeitinformation zugeordnet.

Die Erfindung betrifft zudem eine Speichereinrichtung zur Synchronisation von Datenströmen. Die Speichereinrichtung ist dazu ausgebildet, Datenströmen, die der Speichereinrichtung von einer Anzahl Erfassungseinrichtungen bereitgestellt werden, bei Empfang jeweils eine zusätzliche Zeitinformation zuzuordnen.

Das erfindungsgemäße Netzwerk weist eine Anzahl Erfassungseinrichtungen und eine Speichereinrichtung auf. Dabei sind die Erfassungseinrichtungen dazu ausgebildet, der Speichereinrichtung Datenströme bereitzustellen. Die Speichereinrichtung ist dazu ausgebildet, die Datenströme dadurch zu synchronisieren, indem die Speichereinrichtung den Datenströmen bei Empfang jeweils eine zusätzliche Zeitinformation zuordnet.

Die Erfindung betrifft des weiteren ein Computerprogramm mit Programmcodemitteln, das dazu ausgebildet ist, alle Schritte eines erfindungsgemäßen Verfahrens durchzuführen, wenn das Computerprogramm auf einem Computer oder einer entsprechenden Recheneinheit, insbesondere in einer erfindungsgemäßen Speichereinrichtung, ausgeführt wird.

Das außerdem erfindungsgemäß vorgesehene Computerprogrammprodukt mit Programmcodemitteln, die auf einem computerlesbaren Datenträger gespeichert sind, ist dazu geeignet, alle Schritte eines erfindungsgemäßen Verfahrens durchzuführen, wenn das Computerprogramm auf einem Computer oder einer entsprechenden Recheneinheit, insbesondere in einer erfindungsgemäßen Speichereinrichtung, ausgeführt wird.

Weitere Vorteile ergeben sich aus den jeweiligen abhängigen Patentansprüchen.

Die vorliegende Erfindung ermöglicht einen Einsatz von unsynchronisierten standardisierten Erfassungseinrichtungen. Das in der Erfindung beschriebene Verfahren zur Synchronisation ist nicht auf Audio- und/oder Videoüberwachungssysteme begrenzt. Das Verfahren kann für alle Arten von Datenströmen, die auf erfassten Signalen beruhen und synchronisiert werden müssen, eingesetzt werden.

Die Erfindung erlaubt eine synchronisierte Wiedergabe, Präsentation oder Vorführung verteilter Signale aus verschiedenen, insbesondere medialen, Datenströmen, also Audio-und/oder Videodatenströmen, obwohl diese ohne gegenseitigen Abgleich innerer Synchronisationsinformationen der Erfassungseinrichtungen aufgenommen werden. Die Datenströme, die die Speichereinrichtung von den Erfassungseinrichtungen empfängt, werden in Ausgestaltung in der Speichereinrichtung des Netzwerks, über das die Erfassungseinrichtungen mit der Speichereinrichtung verbunden sind, zentral abgespeichert.

Bei der vorliegenden Erfindung ist vorgesehen, die zusätzliche Zeiteinteilungsinformation den unterschiedlichen innerhalb der Speichereinrichtung empfangenen Datenströmen zuzuordnen oder diesen Datenströmen anzuhängen. In einer möglichen Ausgestaltung ist vorgesehen, diese Zeiteinteilungsinformation mit einer bereits vorhandenen, ursprünglichen Präsentationszeit eines jeweiligen Datenstroms zu kombinieren. Ein dabei neu erzeugter Zeitstempel bzw. eine neu erzeugte Zeitmarke wird anstatt der ursprünglichen Präsentationszeit abgespeichert. Demnach ist kein zusätzlicher Speicherplatz für die zusätzliche Zeiteinteilungsinformation erforderlich.

In einer Ausgestaltung der Erfindung ist ein Zuordnung oder ein Anhängen mindestens einer hoch synchronen Zeitmarke oder eines hoch synchronen Zeitstempels als zusätzliche Zeitinformation während einer Speicherung von Audio-, Video- und/oder Datensignalen durch die Speichereinrichtung, bspw. eine mediale Aufnahme- und/oder Aufzeichnungseinrichtung, vorgesehen. Für diese hoch synchronen Zeitmarken nutzt die Speichereinrichtung eine gemeinsame Referenzuhr und geeignete Protokolle, wie bspw. das Netzwerkzeitprotokoll (Network Time Protocol, NTP).

Verzögerungszeiten, die möglicherweise bei einer Übertragung der Signale von jeweils einer Erfassungseinrichtung zu der Speichereinrichtung entstehen, sind in diesem Zusammenhang vernachlässigbar, zumal diese in gleichem Umfang bei einer direkten Übermittlung von der Erfassungseinrichtung zu der Wiedergabeeinrichtung entstehen. Ein ausschlaggebender Aspekt für eine synchronisierte Anzeige mehrerer Signale ist eine Vermeidung einer Zeitverschiebung zwischen den Signalen, was durch die allgemeine Referenzuhr zur Bereitstellung hoch synchroner Zeitmarken gewährleistet ist.

Eine Auflösung, die für die hoch synchronen Zeitmarken notwendig ist, hängt von einer Dauer von sogenannten Zugangseinheiten der mit den Signalen verbundenen Datenströme ab. Im Fall von medialen Audio- und/oder Videosignalen ist es ausreichend, einen derartigen Wert für die Dauer geringfügig kleiner als eine Dauer einer als Videofeld ausgebildeten Zugangseinheit von ca. 20 Millisekunden oder einer Dauer einer als Audiorahmen ausgebildeten Zugangseinheit von ca. 23 Millisekunden zu wählen. Es wäre demnach bspw. eine Nutzung einer Auflösung, die ca. 1/90000 Sekunde entspricht, wie sie in dem RTP-Protokoll beschrieben wird, ausreichend und vorteilhaft. Die Auflösung für die zusätzliche Zeitinformation ist somit in Ausgestaltung feiner als eine Auflösung einer kleinsten Zugangseinheit innerhalb der Datenströme.

Damit für abzuspeichernde Signale aus Datenströmen, die bereits von den Erfassungseinrichtungen bereitgestellte Zeitstempel aufweisen, kein zusätzlicher Speicherplatz benötigt wird, ist vorzugsweise vorgesehen, diese ursprünglichen Zeitmarken durch die hoch synchronen Zeitmarken oder zumindest durch relevante Teile dieser hoch synchronen Zeitmarken zu ersetzen. Zu diesem Zweck kann die Speichereinrichtung mindestens eine Einheit zum Finden, Lesen und/oder Ersetzen von Informationen zu Zeitmarken oder Zeitstempeln aufweisen.

Für den Fall einer synchronisierten Wiedergabe gespeicherter Audio- und/oder Videoinhalte ist bspw. vorgesehen, dass die Speichereinrichtung für jeden einbezogenen Datenstrom einen letzten sogenannten Zusatzpunkt vor einem angeforderten zeitlichen Anfangspunkt sucht. Ein Anfangspunkt mit dem niedrigsten Wert für die Zeitmarke, d.h. mit dem ältesten Zugangspunkt, wird hierbei als virtueller Startpunkt genutzt. Die hoch synchrone Zeitmarke, die mit diesem Anfangspunkt verbunden bzw. diesem zugeordnet ist, wird als virtuelle Startzeit benutzt. Die Speichereinrichtung beginnt ein Ausspielen und somit eine Bereitstellung dieser einbezogenen, insbesondere medialen, Datenströme für eine Wiedergabeeinrichtung, mit jenem Datenstrom, der den virtuellen Startpunkt aufweist.

Wenn ein erstes Paket mit Datenströmen übermittelt oder versandt wird, wird ein Unterschied zwischen einer aktuellen und/oder fortlaufenden NTP-Zeitmarke und dem virtuellen Startpunkt berechnet. Bei diesem Unterschied handelt es sich um einen Ausspielabstand ("Play-Out-Offset"), der weitgehend einem zeitlichen Unterschied zwischen einer Aufnahme und einer Wiedergabe zur virtuellen Startzeit entspricht.

Das Paket mit sämtlichen einbezogenen Datenströmen kann zu jenem Zeitpunkt versandt werden, zu dem die aktuelle NTP-Zeitmarke gleich einer Summe ihrer hoch synchronen Zeitmarke zuzüglich dem Ausspielabstand ist. Somit ist gewährleistet, dass sämtliche Pakete aller einbezogenen Datenströme mit derselben relativen Zeiteinteilung, mit der sie aufgenommen worden sind, versendet werden. Dabei ist die Speichereinrichtung derart ausgebildet, dass diese als ein genaues Zeitschaltungsaufnahmegerät nach dem Fifo(first in first out)-Prinzip und somit ähnlich einem Datenregister, das eine Einhaltung einer korrekten Reihenfolge von Elementen gewährleistet, funktioniert.

Falls eine ursprüngliche Zeitmarke eines Pakets zur Speicherung durch die hoch synchrone Zeitmarke ersetzt worden ist, kann diese ursprüngliche Zeitmarke mit einer korrekten RTP-Zeitmarke, die vor einem Versenden des Pakets gültig war, wieder eingesetzt werden.

Die Erfassungseinrichtungen für mediale Signale können bspw. als Kameras für Videoquellen und/oder als Mikrophone für Audioquellen, ausgebildet sein. Die Speichereinrichtung für mediale und/oder audiovisuelle Datenströme auf Grundlage der erfassten Signale kann insbesondere als ein Aufzeichnungs- oder Aufnahmegerät für mehrere Datenströme ausgebildet sein.

Eine NTP Zeitmarke weist nachfolgendes Format auf:

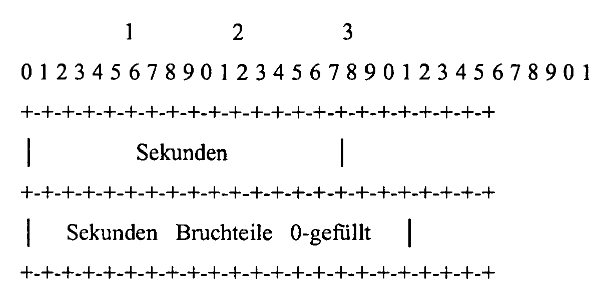

Ein RTP Header, mit festgelegten RTP Header Feldern, hat folgendes Format:

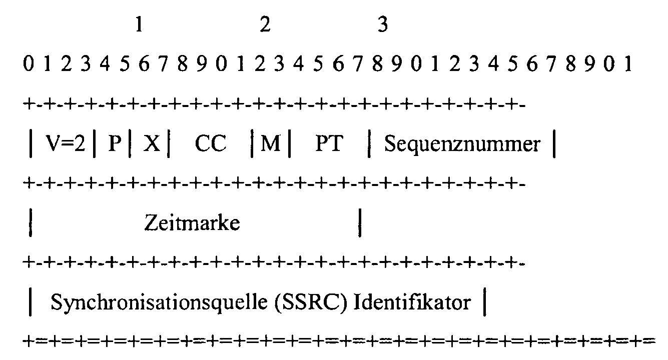

Weitere Vorteile und Ausgestaltungen der Erfindung ergeben sich aus der Beschreibung und der beiliegenden Zeichnung.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand eines Ausführungsbeispiels in der Zeichnung schematisch dargestellt und wird im folgenden unter Bezugnahme auf die Zeichnung ausführlich beschrieben.

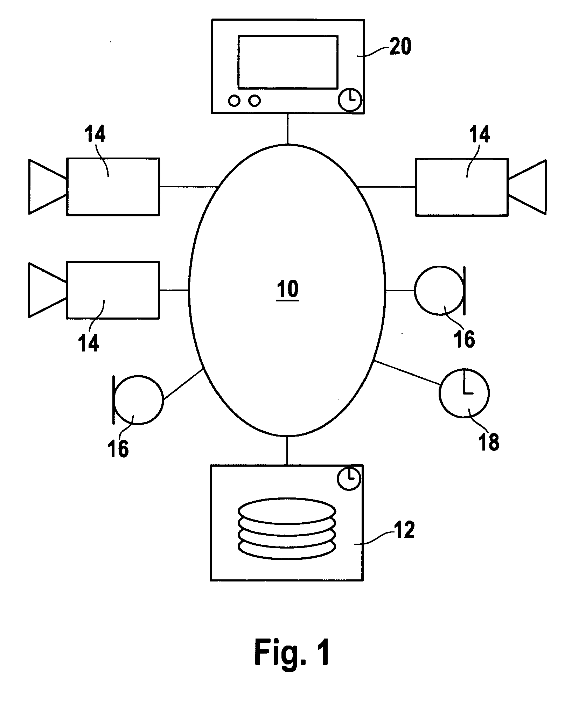

Figur 1 zeigt eine bevorzugte Ausführungsform eines Netzwerks mit einer Speichereinrichtung in schematischer Darstellung.

Das in Figur 1 schematisch dargestellte Netzwerk 10 weist eine Speichereinrichtung 12 sowie als Kameras 14 und Mikrophone 16 ausgebildete Erfassungseinrichtungen zum Erfassen von Video- und Audiosignalen auf. Zudem sind in dem Netzwerk 10 eine allgemeine Referenzuhr 18 zur Bereitstellung einer gemeinsamen Zeit sowie eine Wiedergabeeinrichtung 20 zur Wiedergabe audiovisueller Signale auf Grundlage bereitgestellter Datenströme vorgesehen.

Die Erfassungseinrichtungen sind dazu ausgebildet, audiovisuelle Signale zu Ereignissen in Form von Bildern und Geräuschen zu erfassen. Eine eigentliche Aufnahme oder Aufzeichnung derartiger audiovisueller Signale erfolgt gemäß einer Ausgestaltung des erfindungsgemäßen Verfahrens zentral durch die Speichereinrichtung 12. Datenströme zu den erfassten Signalen, die von den Erfassungseinrichtungen bereitgestellt werden, werden über das Netzwerk 10 zu der Speichereinrichtung 12 übermittelt. Diesen Datenströmen ordnet die Speichereinrichtung 12 bei einem Empfang eine als hoch synchrone Zeitmarke ausgebildete Zeitinformation zu, wobei eine Zeitangabe der allgemeinen Referenzuhr 18 benutzt wird. Somit ist es möglich, die Datenströme der durch die verschiedenen Erfassungseinrichtungen voneinander getrennt erfassten Signale zu synchronisieren. Für eine synchronisierte Wiedergabe werden die synchronisierten Datenströme von der Speichereinrichtung 12 an die Wiedergabeeinrichtung 20 übermittelt.

## Patentansprüche

1. Verfahren zur Synchronisation medialer Datenströme, bei dem die medialen Datenströme von einer Anzahl Erfassungseinrichtungen für eine Speichereinrichtung (12) bereitgestellt werden, und bei dem den medialen Datenströmen bei Empfang in der Speichereinrichtung (12) jeweils eine zusätzliche Zeitinformation zugeordnet wird, **dadurch gekennzeichnet,**
**dass** von der Speichereinrichtung (12) zum Anhängen der zusätzlichen Zeitinformation eine gemeinsame Referenzuhr (18) zur Bereitstellung einer gemeinsamen Zeit benutzt wird.

2. Verfahren nach Anspruch 1, bei dem die zusätzliche Zeitinformation mit mindestens einer ursprünglichen Präsentationszeit eines jeweiligen Datenstroms kombiniert wird.

3. Verfahren nach Anspruch 1 oder 2, bei dem von der Speichereinrichtung (12) zum Anhängen der zusätzlichen Zeitinformation mindestens ein Protokoll, bspw. ein Netzwerkzeitprotokoll, benutzt wird.

4. Verfahren nach einem der Ansprüche 1 bis 3, bei dem eine Auflösung für die zusätzliche Zeitinformation feiner als eine Auflösung einer kleinsten Zugangseinheit innerhalb der Datenströme gewählt wird.

5. Verfahren nach einem der Ansprüche 1 bis 4, bei dem als zusätzliche Zeitinformation eine durch die allgemeine Referenzuhr bereitgestellte Zeitmarke angehängt wird.

6. Verfahren nach einem der Ansprüche 1 bis 5, bei dem zu einer Wiedergabe von Inhalten der medialen Datehströme mindestens eine virtuellen Startzeit benutzt wird, wobei die virtuelle Startzeit einem Anfangspunkt zugeordnet wird, der einen geringsten Wert für die Zeitmarke aufweist.

7. Speichereinrichtung zur Synchronisation von medialen Datenströmen, die dazu ausgebildet ist, medialen Datenströmen, die der Speichereinrichtung (12) von einer Anzahl Erfassungseinrichtungen bereitgestellt werden, bei Empfang jeweils eine zusätzliche Zeitinformation zuzuordnen,
**dadurch gekennzeichnet,**
**dass** die Speichereinrichtung (12) zum Anhängen der zusätzlichen Zeitinformation eine gemeinsame Referenzuhr (18) zur Bereitstellung einer gemeinsamen Zeit benutzt.

8. Netzwerk, das eine Anzahl Erfassungseinrichtungen und eine Speichereinrichtung (12) aufweist, bei dem die Erfassungseinrichtungen dazu ausgebildet sind, der Speichereinrichtung (12) mediale Datenströme bereitzustellen, und bei dem die Speichereinrichtung (12) dazu ausgebildet ist, die medialen Datenströme **dadurch** zu synchronisieren, indem die Speichereinrichtung (12) den medialen Datenströmen bei Empfang jeweils eine zusätzliche Zeitinformation zuordnet, **dadurch gekennzeichnet,**
**dass** die Speichereinrichtung (12) zum Anhängen der zusätzlichen Zeitinformation eine gemeinsame Referenzuhr (18) zur Bereitstellung einer gemeinsamen Zeit benutzt.

9. Computerprogramm mit Programmcodemitteln, um alle Schritte eines Verfahrens nach einem der Ansprüche 1 bis 6 durchzuführen, wenn das Computerprogramm auf einem Computer oder einer entsprechenden Recheneinheit, insbesondere in einer Speichereinrichtung (12) nach Anspruch 7, ausgeführt wird.

10. Computerprogrammprodukt mit Programmcodemitteln, die auf einem computerlesbaren Datenträger gespeichert sind, um alle Schritte eines Verfahrens nach einem der Ansprüche 1 bis 6 durchzuführen, wenn das Computerprogramm auf einem Computer oder einer entsprechenden Recheneinheit, insbesondere in einer Speichereinrichtung (12) nach Anspruch 7, ausgeführt wird.

## Claims

1. Method for the synchronization of medial data streams, in which the medial data streams are provided by a number of sensing devices for a memory device (12), and in which a respective additional time information item is allocated to the medial data streams upon reception in the memory device (12), **characterized in that** the memory device (12) appends the additional time information item by using a common reference clock (18) to provide a common time.

2. Method according to Claim 1, in which the additional time information item is combined with at least one original presentation time for a respective data stream.

3. Method according to Claim 1 or 2, in which the memory device (12) appends the additional time information item by using at least one protocol, for example a network time protocol.

4. Method according to one of Claims 1 to 3, in which a resolution for the additional time information item is chosen to be finer than a resolution of a smallest access unit within the data streams.

5. Method according to one of Claims 1 to 4, in which the additional time information item appended is a time marker provided by the general reference clock.

6. Method according to one of Claims 1 to 5, in which contents of the medial data streams are reproduced by using at least one virtual starting time, wherein the virtual starting time is allocated to an initial point which has a lowest value for the time marker.

7. Memory device for the synchronization of medial data streams which is designed to allocate a respective additional time information item to medial data streams, which are provided for the memory device (12) by a number of sensing devices, upon reception, **characterized**
**in that** the memory device (12) appends the additional time information item by using a common reference clock (18) to provide a common time.

8. Network which has a number of sensing devices and a memory device (12), in which the sensing devices are designed to provide medial data streams for the memory device (12) and in which the memory device (12) is designed to synchronize the medial data streams by virtue of the memory device (12) allocating a respective additional time information item to the medial data streams upon reception,
**characterized**
**in that** the memory device (12) appends the additional time information item by using a common reference clock (18) to provide a common time.

9. Computer program having program code means in order to perform all the steps of a method according to one of Claims 1 to 6 when the computer program is executed on a computer or an appropriate computation unit, particularly in a memory device (12) according to Claim 7.

10. Computer program product having program code means which are stored on a computer-readable data storage medium in order to perform all the steps of a method according to one of Claims 1 to 6 when the computer program is executed on a computer or an appropriate computation unit, particularly in a memory device (12) according to Claim 7.

## Revendications

1. Procédé de synchronisation de flux de données de média, dans lequel les flux de données de média sont délivrés par plusieurs dispositifs de détection à un dispositif de mémoire (12) et dans lequel une information supplémentaire de temps est associée aux flux de données de média lors de leur réception dans le dispositif de mémoire (12),
**caractérisé en ce que**
le dispositif de mémoire (12) utilise une horloge de référence (18) commune qui délivre un temps commun lors de l'annexion de l'information supplémentaire de temps.

2. Procédé selon la revendication 1, dans lequel l'information supplémentaire de temps est combinée avec au moins une heure initiale de présentation de chaque flux de données.

3. Procédé selon la revendication 1 ou 2, dans lequel le dispositif de mémoire (12) utilise au moins un protocole, par exemple un protocole de temps de réseau, pour annexer l'information supplémentaire de temps.

4. Procédé selon l'une des revendications 1 à 3, dans lequel la résolution de l'information supplémentaire de temps est plus fine que la résolution de la plus petite unité d'accès située à l'intérieur des flux de données.

5. Procédé selon l'une des revendications 1 à 4, dans lequel l'information temporelle annexée est un repère temporel délivré par l'horloge de référence générale.

6. Procédé selon l'une des revendications 1 à 5, dans lequel au moins un temps virtuel de départ est utilisé pour la reproduction du contenu des flux de données de média, le temps virtuel de départ étant associé à un point initial qui présente la plus petite valeur du repère temporel.

7. Dispositif de mémoire destiné à la synchronisation de flux de données de média, configuré pour associer une information supplémentaire de temps à des flux de données de média qui sont délivrés au dispositif de mémoire (12) par plusieurs dispositifs de détection,
**caractérisé en ce que**
le dispositif de mémoire (12) utilise une horloge de référence commune (18) qui délivre un temps commun pour l'annexion de l'information supplémentaire de temps.

8. Réseau qui présente plusieurs dispositifs de détection et un dispositif de mémoire (12), dans lequel les dispositifs de détection sont configurés pour délivrer au dispositif de mémoire (12) des flux de données de média, le dispositif de mémoire (12) étant configuré pour synchroniser les flux de données de média grâce au fait que le dispositif de mémoire (12) associe une information supplémentaire de temps aux flux de données de média lors de leur réception,
**caractérisé en ce que**
le dispositif de mémoire (12) utilise une horloge de référence commune (18) qui délivre un temps commun pour l'annexion de l'information supplémentaire de temps.

9. Programme informatique doté de moyens de code de programme qui exécutent toutes les étapes d'un procédé selon l'une des revendications 1 à 6 lorsque le programme informatique est exécuté sur un ordinateur ou une unité de calcul appropriée, en particulier dans un dispositif de mémoire (12) selon la revendication 7.

10. Produit de programme informatique doté de moyens de code de programme qui sont conservés en mémoire sur un support de données lisibles par ordinateur et qui exécutent toutes les étapes d'un procédé selon l'une des revendications 1 à 6 lorsque le programme informatique est exécuté sur un ordinateur ou une unité de calcul appropriée, en particulier dans un dispositif de mémoire (12) selon la revendication 7.
